# EUROPÄISCHE PATENTSCHRIFT

(11) **EP 1 900 582 B1**
(45) Veröffentlichungstag und Bekanntmachung des Hinweises auf die Patenterteilung: **11.11.2015**
(21) Anmeldenummer: 07017944.5
(22) Anmeldetag: 13.09.2007
(51) Int. Cl.: B60T 7/10, G05G 1/04, B60T 15/04, G05G 5/06

(54) **Hebelvorrichtung für ein Handbremsventil einer Bremsanlage**
Lever device for a handbrake valve in a braking device
Dispositif à levier pour une soupape de frein à main d'une installation de frein

(30) Priorität: 14.09.2006 DE 102006043164
(43) Veröffentlichungstag der Anmeldung: 19.03.2008
(73) Patentinhaber: KNORR-BREMSE Systeme für Nutzfahrzeuge GmbH, 80809 München (DE)
(72) Erfinder: Vollmer, Otto, 80689 München (DE)
(74) Vertreter: Mattusch, Gundula

(56) Entgegenhaltungen:
- EP-A1- 0 171 569
- EP-A2- 0 149 070
- GB-A- 2 229 795

## Beschreibung

Die Erfindung betrifft eine Hebelvorrichtung, insbesondere eine Hebelvorrichtung für ein Handbremsventil einer Bremsanlage, mit einem um eine Schwenkachse schwenkbaren Hebel und mit einem Griff, der zur Variation einer Stellung des Hebels dient und bezüglich des Hebels bewegbar geführt ist, wobei weiterhin ein bezüglich des Hebels bewegbares Rastierelement vorgesehen ist, das zur Stellungsfixierung des Hebels dient.

Eine solche Hebelvorrichtung ist aus EP 0171569 A bekannt.

Derartige Hebelvorrichtungen werden im Kraftfahrzeugbereich, insbesondere bei Nutzfahrzeugen, allgemein zur Betätigung von Handbremsventilen einer Kraftfahrzeugbremsanlage eingesetzt. In diesem Fall stehen die Handbremsventile mit der Bremsanlage zugeordneten Federspeicherzylindern in Verbindung. Die Handbremsventile dienen insbesondere dazu, eine Feststellbremse und/oder eine Hilfsbremse eines Nutzfahrzeuges über die Federspeicherzylinder zu betätigen. Beispielsweise auch bei Zugfahrzeugen, die mit einem Anhänger oder Auflieger verbunden sind, kann durch das Handbremsventil auch die Feststellbremse und/oder die Hilfsbremse des Anhängers oder Aufliegers betätigt werden. Die Betätigung des Handbremsventils durch die Hebelvorrichtung erfolgt dabei über einen mit einem Griff versehenen und um eine Schwenkachse schwenkbaren Hebel beziehungsweise Kipphebel, wobei der Griff üblicherweise bewegbar an dem Hebel geführt ist. Mittels dem an dem Hebel vorgesehen Griff ist die Betätigung des Handbremsventils und damit die Betätigung der Feststellbremse und/oder Hilfsbremse feinfühlig einstellbar beziehungsweise abstufbar. Beispielsweise lässt sich der schwenkbare Hebel mittels des Griffs von einer Grundstellung beziehungsweise Parkbremslösestellung, bei der die in Rede stehenden Bremsen nicht betätigt werden, in Richtung einer so genannten Parkbremsstellung schwenken, bei der die vorgenannten Bremsen nahezu maximal betätigt werden. Zur Stellungsfixierung des Hebels, beispielsweise in der Parkbremsstellung, ist ein bezüglich des Hebels bewegbares Rastierelement vorgesehen, das bei Erreichen der Parkbremsstellung die Stellungsfixierung beziehungsweise eine Verriegelung des Hebels bewirken kann. Zum Lösen der Stellungsfixierung beziehungsweise zum Entriegeln des Hebels ist das Rastierelement üblicherweise mit dem Griff unmittelbar gekoppelt und dadurch zusammen mit dem Griff in eine Lösestellung beziehungsweise Entriegelungsstellung bewegbar. Jedoch kann bei diesen bekannten Hebelvorrichtungen bei extremer Beanspruchung oder Fehlbedienung durch den Bediener beim Schwenkvorgang in die Parkbremsstellung zur Stellungsfixierung des Hebels der theoretisch mögliche Fall auftreten, dass das Rastierelement die Stellung des Hebels zwar fixiert, aber ohne korrekt und damit sicher einzurasten. Dieser Fall tritt insbesondere dann auf, wenn die unmittelbare Kopplung zwischen dem Griff und dem Rastierelement sämtliche auf den Griff wirkende Drehmomente auf das Rastierelement überträgt. Die auf das Rastierelement übertragenen Drehmomente können derart verlaufen, dass das Rastierelement in eine nicht zur Stellungsfixierung geeignete Lage versetzt wird, den Hebel aber ohne einzurasten dennoch labil fixiert, beispielsweise durch Verkanten mit anderen Elementen. Auch bei Vorliegen einer Kopplung zwischen dem Griff und Rastierelement, bei der teilweise auf den Griff ausgeübte Drehmomente nicht auf das Rastierelement übertragen werden, kann ein Verkanten des Rastierelements auftreten. Insbesondere dann, wenn der Griff durch Beanspruchung derart verformt wird, dass er durch Verformung zumindest abschnittsweise mit dem Rastierelement in Berührung gelangt. Dadurch kann sich eine labile und unter Umständen eine sich selbsttätig lösende Hebelstellung ergeben. Somit kann beispielsweise ein Fahrer des Kraftfahrzeugs fälschlicher Weise zu der Auffassung gelangen, der Hebel sei in der Parkbremsstellung sicher fixiert. Jedoch kann die Verkantung des Rastierelements beziehungsweise des Einrastabschnitts durch Erschütterungen des Kraftfahrzeugs leicht wieder gelöst werden. Derartige Erschütterungen können beispielsweise durch Zuschlagen einer Fahrzeugtüre oder in sonstiger Weise hervorgerufen werden. Dadurch kann sich das Rastierelement beziehungsweise dessen Einrastabschnitt aus der Verkantung lösen, wodurch das Kraftfahrzeug beispielsweise auf einer Schräge wegzurollen beginnen kann.

Der Erfindung liegt daher die Aufgabe zugrunde, die gattungsgemäßen Hebelvorrichtungen derart weiterzubilden, dass eine Stellungsfixierung des Hebels durch korrektes Einrasten des Rastierelements unabhängig von der Beanspruchung des Griffs sicher gewährleistet werden kann.

Diese Aufgabe wird durch die Merkmale des unabhängigen Anspruchs gelöst.

Vorteilhafte Ausgestaltungen und Weiterbildungen der Erfindung ergeben sich aus den abhängigen Ansprüchen.

Die erfindungsgemäße Hebelvorrichtung baut auf dem gattungsgemäßen Stand der Technik dadurch auf, dass zum Rastierelement benachbarte Abschnitte des Griffs mit einem hinsichtlich einer Hebelachse radialen Abstand zum Rastierelement angeordnet sind, um eine Übertragung von nicht parallel zur Schwenkachse gerichteten oder verlaufenden Drehmomentkomponenten von dem Griff auf das Rastierelement zu verhindern. Durch das Vorsehen des radialen Abstands der zu dem Rastierelement benachbarten Abschnitte kann eine Übertragung unerwünschter Drehmomentkomponenten von dem Griff oder zumindest den mit radialen Abstand vorgesehen benachbarten Abschnitten weitestgehend verhindert werden. Selbst bei verhältnismäßig hohen Beanspruchungen des Griffs, unter deren Einwirkung sich der Griff gegebenenfalls verformen kann, wird eine direkte Berührung der benachbarten Abschnitte vermieden. Zweckmäßigerweise ist der radiale Abstand der zu dem Rastierelement benachbarten Abschnitte so gewählt, dass sich der Griff auch unter verhältnismäßig hohen Beanspruchungen verformen kann, ohne dass die benachbarten Abschnitte mit dem Rastierelement in Berührung gelangen können. Dadurch wird sichergestellt, dass die Lage des Rastierelements im Wesentlichen nicht von der Beanspruchung des Griffs abhängt. Somit wird ein Verkanten eines Einrastabschnitts verhindert und dadurch eine sichere Stellungsfixierung des Hebels gewährleistet.

Die erfindungsgemäße Hebelvorrichtung kann in vorteilhafter Weise derart weitergebildet sein, dass der Griff durch eine Führungseinrichtung geführt wird, durch die das Rastierelement in einer vorbestimmten Position des Hebels in eine Raststellung bewegbar ist, wobei das Rastierelement durch Ziehen an dem Griff in einer Hebelachsrichtung in eine Lösestellung bewegbar ist. Die vorbestimmte Position beziehungsweise Stellung des Hebels entspricht beispielsweise der vorgenannten Parkbremsposition, in die der Hebel ausgehend von seiner Grundstellung bewegbar ist. Ist der Hebel in der Parkbremsstellung fixiert, so wird das Rastierelement aufgrund der Führungseinrichtung in die Einrastöffnung gebracht. Dies wird beispielsweise dadurch bewerkstelligt, dass die Führungseinrichtung neben Führungselementen eine Feder aufweist, die das Rastierelement in Richtung der Einrastöffnung vorspannt. Soll das Rastierelement wieder aus der Raststellung in die Lösestellung gebracht werden, wird durch Aufbringen einer Zugkraft auf den Griff das Rastierelement mitbewegt. Dies wird beispielsweise durch eine Kopplung zwischen dem Griff und dem Rastierelement hervorgerufen, die eine Übertragung von in Hebelachsrichtung wirkenden Kräften zulässt, jedoch eine Drehmomentübertragung unterbindet oder nahezu vernachlässigbar klein hält. Beispielsweise kann die Kopplung mit rotatorischem Freiheitsgrad, aber mit axialer Kraftübertragung ausgeführt sein.

Weiterhin kann die erfindungsgemäße Hebelvorrichtung so verwirklicht werden, dass die Führungseinrichtung zusätzlich einen Führungsring aufweist, der zur Anlage an dem Rastierelement vorgesehen ist. Insbesondere ist es vorteilhaft, einen Führungsring zwischen dem Rastierelement und einem Führungselement der Führungseinrichtung vorzusehen und zwar vorzugsweise benachbart zu dem das Rastierelement umgebenden Abschnitt des Griffs. Der Führungsring ist derart zwischen dem Rastierelement und dem Führungselement angeordnet, dass er mit dem Griff zumindest abschnittsweise in Berührung steht. Darüber hinaus ist der Führungsring so ausgelegt, dass er bei einer Verformung beziehungsweise Verbiegung des Griffs, die beispielsweise durch die vorgenannten auf den Griff wirkenden Drehmomentkomponenten hervorgerufen wird, einen direkten Kontakt der benachbarten Abschnitte des Griffs mit dem Rastierelement zusätzlich hemmt.

Darüber hinaus kann die erfindungsgemäße Hebelvorrichtung so ausgebildet sein, dass die Führungseinrichtung den Griff mit rotatorischem Freiheitsgrad um den Hebel führt. Der Griff kann beispielsweise aufgrund des rotatorischen Freiheitsgrads drehbar an dem Hebel vorgesehen sein. Vorzugsweise wird der Griff jedoch durch die Führungseinrichtung mit rotatorischem Freiheitsgrad geführt, ist aber mit dem Hebel drehfest gekoppelt und gleichzeitig in Axialrichtung des Hebels bewegbar. Dies kann beispielsweise durch eine ausschließliche formschlüssige Kopplung zwischen dem Griff und dem Hebel analog zu einer formschlüssigen Welle/Nabe-Verbindung realisiert werden. Dadurch wird eine Übertragung von zur Hebelachse parallelen Drehmomentkomponenten weitestgehend verhindert.

In diesem Zusammenhang ist es vorteilhaft, wenn die erfindungsgemäße Hebelvorrichtung so weitergebildet wird, dass das Rastierelement einem Rastiermechanismus zugeordnet ist, der eine Gleitbahn aufweist, an der das Rastierelement gleitfähig anliegt, wobei die Gleitbahn bei der vorbestimmten Position des Hebels ein Einrasten des Rastierelements ermöglicht, so dass das Rastierelement den Hebel in der vorbestimmten Position fixiert. Beispielsweise kann eine Schaltkulisse verwendet werden, die die Gleitbahn umfasst. An der Gleitbahn ist bei der vorbestimmten Position eine Einrastöffnung vorgesehen, in die das Rastierelement einrasten kann. Der Verlauf der Gleitbahn wird beispielsweise durch die Formgebung der Schaltkulisse vorgegeben. In der Regel bildet die Schaltkulisse ein räumlich gekrümmtes Langloch aus, dessen Randbereich die Gleitbahn bildet. Bei der vorbestimmten Position weitet sich dieses Langloch zur Ausbildung der Einrastöffnung auf.

Weiterhin kann die erfindungsgemäße Hebelvorrichtung derart verwirklicht werden, dass das Rastierelement zumindest einen Einrastabschnitt, vorzugsweise einen Einrastvorsprung, mit einer daran vorgesehenen Fase aufweist. Der Einrastabschnitt kann beispielsweise in der Form eines Rastzahns ausgebildet sein und befindet sich von der Grundstellung des Hebels ausgehend bis zur vorbestimmten Position mit der Gleitbahn in Berührung. Damit bei Erreichen der Einrastöffnung das Einrasten erleichtert wird, ist an dem Einrastabschnitt eine Fase vorgesehen, über die der Einrastabschnitt über die Einrastöffnung einrasten kann. Sind zwei Einrastabschnitte vorgesehen, so ist das Vorsehen von jeweils einer Fase für den Einrastvorgang besonders von Vorteil. Ist nämlich die Fase an dem einen Einrastabschnitt an der vorauseilenden Seite des Einrastabschnitts bezüglich der Hebelschwenkrichtung vorgesehen, wohingegen die Fase an dem anderen Einrastabschnitt an der nacheilenden Fase bezüglich der Hebelschwenkrichtung vorgesehen ist, wird das Einrasten weiterhin sicherer gestaltet. Dadurch wird vermieden, dass sich der eine Einrastabschnitt bereits teilweise in der Einrastöffnung befindet, während der andere Einrastabschnitt beispielsweise noch mit einer Kante an der Gleitbahn festhängt. Da statt der Kante die Fase vorgesehen ist, wird ein sicheres Einrasten des anderen Einrastabschnitts über die Fase gewährleistet. Dadurch wird ein Einrasten beider Einrastabschnitte sichergestellt.

Die Erfindung wird nun mit Bezug auf die begleitenden Zeichnungen anhand eines bevorzugten Ausführungsbeispiels beispielhaft erläutert.

Es zeigen:
- Figur 1: eine Schnittdarstellung der erfindungsgemäßen Hebelvorrichtung in einer Parkbremslösestellung gemäß einem Ausführungsbeispiel der Erfindung;
- Figur 2: eine Schnittdarstellung der erfindungsgemäßen Hebelvorrichtung von Figur 1 kurz vor Erreichen einer Parkbremsstellung;
- Figur 3: eine Schnittdarstellung der erfindungsgemäßen Hebelvorrichtung von Figur 2 in der Parkbremsstellung;
- Figur 4: eine vergrößerte Querschnittsdarstellung der erfindungsgemäßen Hebelvorrichtung von Figur 1 entlang einem Schnitt A-A; und
- Figur 5: eine Seitenansicht eines Rastierelements der erfindungsgemäßen Hebelvorrichtung.

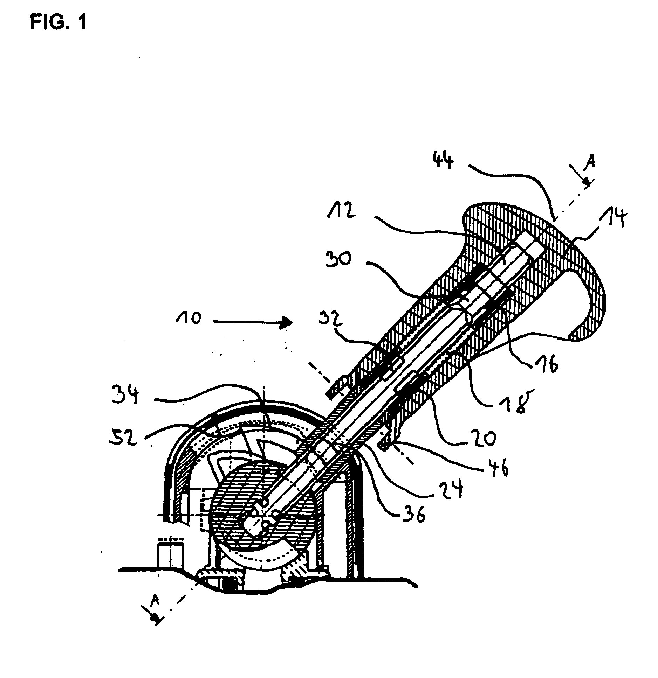

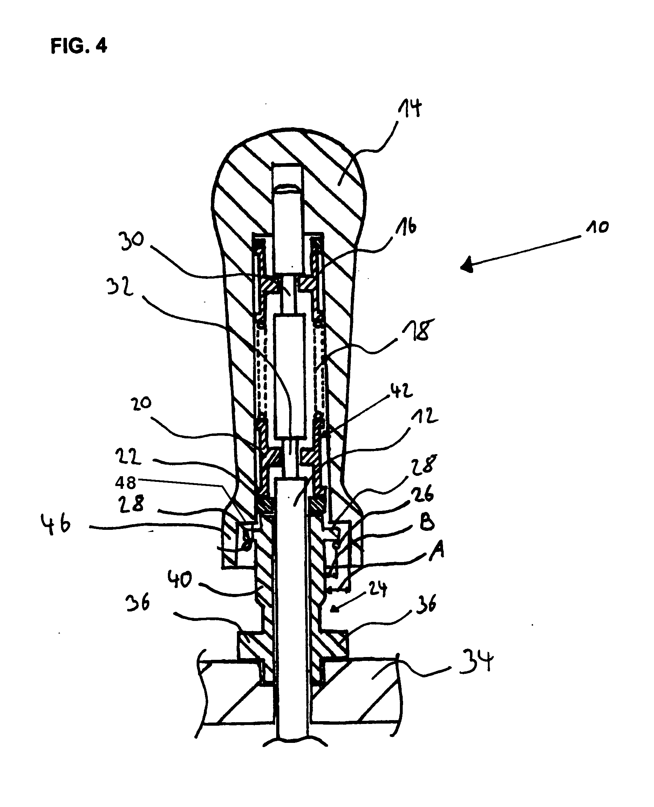

Figur 1 zeigt eine Schnittdarstellung der erfindungsgemäßen Hebelvorrichtung 10 in einer Parkbremslösestellung gemäß einem Ausführungsbeispiel der Erfindung. Darüber hinaus ist ein hier nicht näher interessierendes Handbremsventil zumindest teilweise dargestellt, das mit der Hebelvorrichtung 10 gekoppelt und darüber betätigbar ist. Zur Erläuterung des Aufbaus der erfindungsgemäßen Hebelvorrichtung 10 wird zunächst auf Figur 4 Bezug genommen. Figur 4 zeigt eine vergrößerte Querschnittsdarstellung der erfindungsgemäßen Hebelvorrichtung 10 von Figur 1 entlang einem Schnitt A-A. Wie hieraus ersichtlich ist, umfasst die Hebelvorrichtung 10 einen schwenkbaren Hebel 12, der mit dem hier nicht näher interessierenden und in Figur 4 nicht gezeigten Handbremsventil um eine Schwenkachse schwenkbar gekoppelt ist. Weiterhin ist um den Hebel 12 ein Griff 14 vorgesehen, der zur Variation einer Stellung des Hebels 12 dient. Dabei ist der Griff 14 teilweise von dem Hebel 12 in einer Axialrichtung beziehungsweise in Hebelachsrichtung des Hebels 12 bewegbar geführt, wird von dem Hebel 12 aber gleichzeitig drehfest um eine Hebelachse 44 gehalten. Darüber hinaus wird der Griff von einer Führungseinrichtung 42 in der Axialrichtung des Hebels 12 bewegbar und mit rotatorischem Freiheitsgrad um den Hebel 12 beziehungsweise die Hebelachse 44 geführt. Die Führungseinrichtung 42 weist in Figur 4 gesehen ein oberes und unteres hohlzylindrisches beziehungsweise manschettenförmiges Führungselement 16 und 20 auf. Das obere und untere hohlzylindrische Führungselement 16 und 20 weist jeweils einen radial nach innen weisenden ringförmigen Vorsprungsabschnitt auf. Die Vorsprungsabschnitte der Führungselemente 16 und 20 sind in einem in der Hebelachsrichtung bewegbar gelagert. Dabei sind der obere und untere Hebelabschnitt 30 und 32 in der Form einer um den Hebel 12 umlaufenden Nut ausgebildet. Anhand deren Breite ist das Bewegungsausmaß der Führungselemente 16 und 20 definierbar. Zwischen dem oberen und unteren Führungselement 16 und 20 ist eine der Führungseinrichtung 42 zugeordnete Feder 18 in der Form einer Schraubenfeder angeordnet. Über die Feder 18 werden das obere und untere Führungselement 16 und 20 in voneinander wegweisende Richtungen entlang der Hebelachse 44 vorgespannt. Darüber hinaus ist ein der Führungseinrichtung 42 zugeordneter Führungsring 22 an einem unteren Ende des unteren Führungselements 20 vorgesehen, der sich in Anlage mit einem Rastierelement 24 befindet, das nachstehend erläutert wird. Der Führungsring 22 ist derart ausgelegt, dass er zumindest abschnittsweise mit Abschnitten des Griffs in Berührung bringbar ist. Das Rastierelement 24 ist in Anlage mit dem Führungsring 22 um den Hebel 12 herum angeordnet und dient zur Stellungsfixierung beziehungsweise zur Verriegelung einer Stellung des Hebels 12. Ebenso wie der Griff 14 ist das Rastierelement 24 in der Axialrichtung des Hebels 12 bewegbar geführt. Das Rastierelement 24 ist näherungsweise T-förmig ausgebildet und umfasst im Wesentlichen einen hohlzylindrischen Hauptkörper 40, der in Figur 4 gesehen an dessen oberen Ende zwei sich seitlich von dem Hauptkörper 40 erstreckende Betätigungsvorsprünge 28 und an dessen unteren Ende zwei sich seitlich erstreckende Einrastabschnitte 36 aufweist. Das Rastierelement 24 wird zumindest teilweise von zu dem Rastierelement 24 in radialen Abstand A und B angeordneten, benachbarten Abschnitten 46 und 26 des Griffs 14 derart umgeben, dass sich die benachbarten Abschnitte 46 und 26 über die Betätigungsvorsprünge 28 in Hebelachsrichtung hinweg erstrecken. Die zu dem Rastierelement 24 benachbarten Abschnitte 46 und 26 werden von einem hohlzylindrischen in Figur 4 gesehen unteren Abschnitt 46 beziehungsweise Endabschnitt 46 des Griffs 14 sowie von einem innerhalb des hohlzylindrischen unteren Abschnitts 46 angeordneten Betätigungsabschnitt beziehungsweise Mitnehmerabschnitt 26 des Griffs 14 gebildet. Der hohlzylindrische Abschnitt 46 ist mit dem radialen Abstand A bezüglich dem Rastierelement 24 beabstandet. Der Betätigungsabschnitt hingegen ist mit einem radialen Abstand B bezüglich dem Rastierelement 24 beabstandet, der kleiner als der Abstand A ist. Dabei ist der Betätigungsabschnitt 26 zumindest teilweise unterhalb der Betätigungsvorsprünge 28 angeordnet. Vorzugsweise wird der Betätigungsabschnitt 26 von in den hohlzylindrischen unteren Abschnitt 46 eingeschobenen Mitnehmerstiften gebildet. Der hohlzylindrische untere Abschnitt 46 umfasst einen Anschlag 48 beziehungsweise einen Absatz 48, so dass die Betätigungsvorsprünge 28 zwischen dem Absatz 48 und dem Betätigungsabschnitt 26 des Griffs 14 angeordnet sind. Weiterhin weist das Rastierelement 24 die Einrastabschnitte 36 auf, die zumindest zwischen einer Parkbremslösestellung und kurz vor Erreichen einer Parkbremsstellung des Hebels 12 mit einer Gleitbahn 34 einer Schaltkulisse in Berührung stehen. Die Gleitbahn 34 wird dabei aus einem Randbereich eines räumlich gekrümmten Langlochs ausgebildet, wie aus den Figuren 1 bis 4 ersichtlich ist. Beispielsweise kann die Gleitbahn 34 durch die Formgebung einer Schaltkulisse gebildet werden.

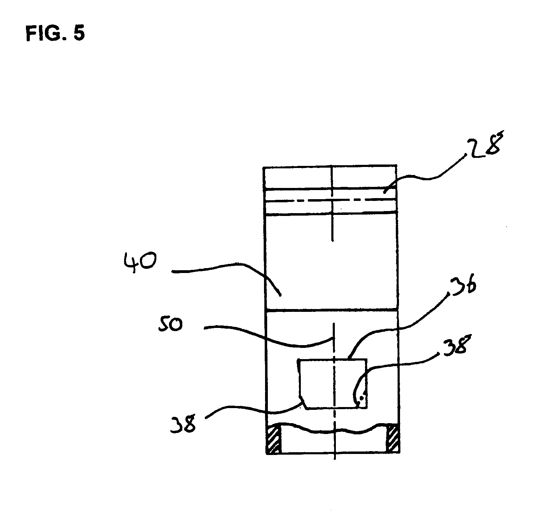

Figur 5 zeigt eine Seitenansicht (von links oder rechts in Figur 4 gesehen) des Rastierelements 24. Wie daraus ersichtlich ist, erstrecken sich die im Wesentlichen quaderförmigen Einrastabschnitte 36 von dem Hauptkörper 40 des Rastierelements 24 und sind bezüglich einer Rastierelementlängsachse 50 achsensymmetrisch ausgebildet. An den quaderförmig ausgebildeten Einrastabschnitten 36 ist jeweils eine Fase 38 vorgesehen, die jeweils an einem unteren Kantenbereich der quaderförmigen Einrastabschnitte 36 ausgebildet ist. Ebenso ist aus Figur 5 ersichtlich, dass die jeweiligen Fasen 38 der Einrastabschnitte 36 aufgrund der Achsensymmetrie bezüglich der Rastierelementlängsachse 50 zueinander versetzt sind. So ist die Fase 38 des einen, in Figur 5 vorne dargestellten Einrastabschnitts 36 in dem linken unteren Kantenbereich des quaderförmigen Einrastabschnitts 36 ausgebildet. Hingegen ist die Fase 38 (durch gestrichelte Linie dargestellt) des anderen, in Figur 5 hinten und damit verdeckten Einrastabschnitts 36 in dem rechten unteren Kantenbereich des quaderförmigen Einrastabschnitts 36 ausgebildet. Damit ergibt sich bezüglich einer Schwenkbewegungsrichtung des Hebels 12 jeweils eine vorauseilende und nachlaufende Fase 38 des entsprechenden Einrastabschnitts 36. Vorzugsweise weisen die Fasen 38 beider Einrastabschnitte 36 eine Fasenbreite im Bereich von 1 mm bis 3 mm, insbesondere 1,5 mm, und einen Fasenwinkel im Bereich von 15° bis 45°, insbesondere 30°, auf.

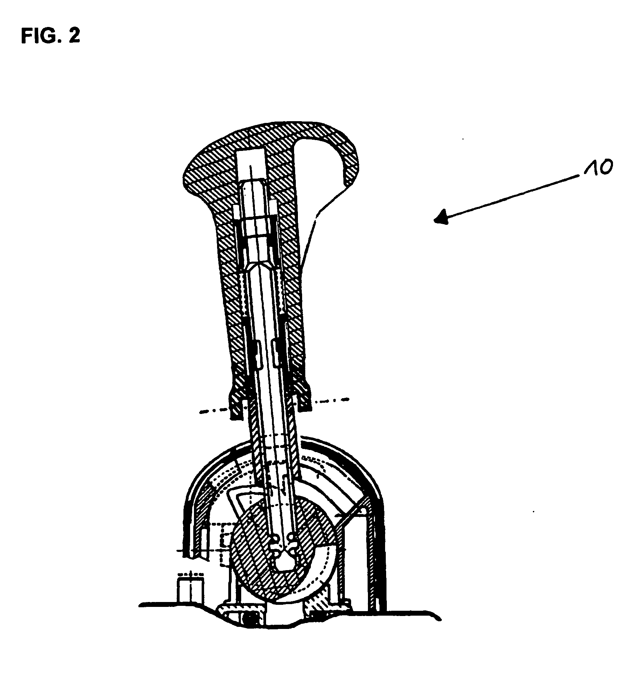

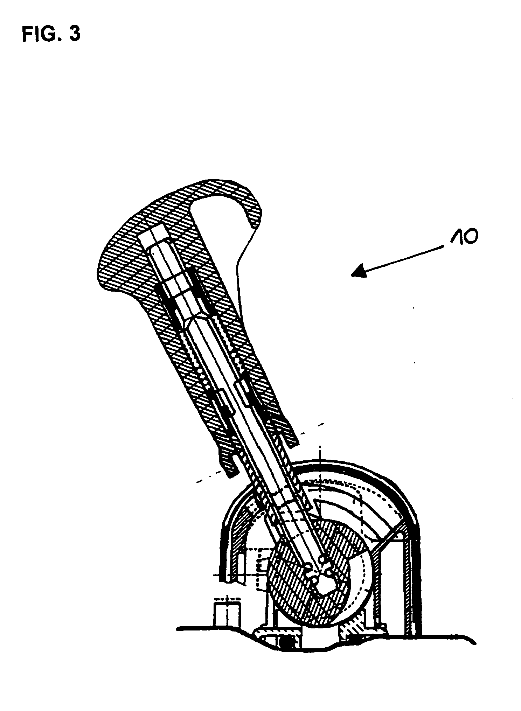

Nachstehend wird der Betrieb des erfindungsgemäßen Hebelmechanismus anhand der Figuren 1 bis 3 erläutert. Figur 1 zeigt die erfindungsgemäße Hebelvorrichtung 10 in der Parkbremslösestellung. In dieser Stellung befindet sich das Rastierelement 24 in Anlage mit der Gleitbahn 34, wobei die Führungseinrichtung 42 das Rastierelement 24 mittels deren Feder 18 in Richtung zur Gleitbahn 34 vorspannt. Wird der Hebel 12 über den Griff 14 in Richtung der Parkbremsstellung bis kurz vor Erreichen der Parkbremsstellung bewegt, so wird das untere Führungselement 20 der Führungseinrichtung 42 aufgrund des Verlaufs der Gleitbahn 34 in eine in Figur 2 oder 4 nach oben weisende Richtung entlang dem Hebel 12 bewegt und damit ebenso der Griff 14. Dabei spannt die Führungseinrichtung weiterhin das Rastierelement 24 gegen die Gleitbahn 34 vor. Während dieser Bewegung wird eine Übertragung auf das Rastierelement 24 von sämtlichen auf den Griff 14 wirkenden Drehmomentkomponenten, die nicht parallel zur Schwenkachse des Hebels 12 sind, durch den radialen Abstand A, B der zu dem Rastierelement 24 benachbarten Abschnitte 46 und 26 verhindert. Der Abstand A, B der benachbarten Abschnitte 46 und 26 ist derart gewählt, dass selbst bei verhältnismäßig starker Beanspruchung des Griffs 14, die zu einer Verformung auch der benachbarten Abschnitte des Griffs führen kann, keine Übertragung derartiger Drehmomentkomponenten auf das Rastierelement 24 stattfindet. Darüber hinaus unterbindet der zwischen dem Rastierelement 24 und dem unteren Führungselement 20 angeordnete Führungsring 22 durch dessen Auslegung zusätzlich eine Verformung der benachbarten Abschnitte 46 und 26 des Griffs 14 in Richtung des Rastierelements 24. Dadurch gelangen die benachbarten Abschnitte 46 und 26 des Griffs 14 nicht in direkte Berührung mit dem Rastierelement 24. Wird der Hebel weiter in die Parkbremsstellung wie in Figur 3 gezeigt bewegt, so rastet das Rastierelement 24 mit den Einrastabschnitten in einer Einrastöffnung 52 der Gleitbahn 34 unter der durch die Führungseinrichtung 42 aufgebrachten Vorspannung ein, wodurch der Griff 14 ebenso mit dem Rastierelement 24 bewegt wird. Die Einrastöffnung 52 wird beispielsweise durch Aufweitung des Langlochs gebildet. Anhand der an den Einrastabschnitten 36 vorgesehenen Fasen 38 können die Einrastabschnitte 36 über diese Fasen 38 in der Einrastöffnung 52 einrasten. Dadurch, dass die Fasen 38 jeweils versetzt zueinander beziehungsweise achssymmetrisch bezüglich der Rastierelementlängsachse 50 angeordnet sind, wie vorstehend beschrieben ist, wird, selbst wenn es zu einer Verdrehung des Rastierelements 24 kommen sollte, vermieden, dass lediglich einer der Einrastabschnitte 36 einrastet. Zum Aufheben der Stellungsfixierung des Hebels 12 wird eine Zugkraft auf den Griff 14 ausgeübt, d.h. eine Kraft in einer in Figur 3 nach oben weisenden Richtung. Dadurch, dass sich die Betätigungsvorsprünge 28 des Rastierelements 24 zwischen dem Betätigungsabschnitt 26 und dem Absatz 48 des Griffs 14 befinden, kann das Rastierelement 24 aus der Einrastöffnung 52 gegen die Vorspannung der Führungseinrichtung 42 aus der Raststellung herausbewegt werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Hebelvorrichtung
- 12: Hebel
- 14: Griff
- 16: oberes Führungselement
- 18: Feder
- 20: unteres Führungselement
- 22: Führungsring
- 24: Rastierelement
- 26: Betätigungsabschnitt
- 28: Betätigungsvorsprung
- 30: oberer Hebelabschnitt
- 32: unterer Hebelabschnitt
- 34: Gleitbahn
- 36: Einrastabschnitt
- 38: Fase
- 40: hohlzylindrischer Hauptkörper
- 42: Führungseinrichtung
- 44: Hebelachse
- 46: unterer, hohlzylindrischer Abschnitt des Griffs
- 48: Absatz bzw. Anschlag
- 50: Rastierelementlängsachse
- 52: Einrastöffnung
- A: radialer Abstand
- B: radialer Abstand

## Patentansprüche

1. Hebelvorrichtung (10), insbesondere Hebelvorrichtung (10) für ein Handbremsventil einer Bremsanlage, mit einem um eine Schwenkachse schwenkbaren Hebel (12) und mit einem Griff (14), der zur Variation einer Stellung des Hebels (12) dient und bezüglich des Hebels (12) bewegbar geführt ist, wobei weiterhin ein bezüglich des Hebels (12) bewegbares Rastierelement (24) vorgesehen ist, das zur Stellungsfixierung des Hebels (12) dient, **dadurch gekennzeichnet, dass** zum Rastierelement (24) benachbarte Abschnitte (26, 46) des Griffs (14) mit einem hinsichtlich einer Hebelachse (44) radialen Abstand (A, B) zum Rastierelement (24) angeordnet sind, um eine Übertragung von nicht parallel zur Schwenkachse gerichteten Drehmomentkomponenten von dem Griff (14) auf das Rastierelement (24) zu verhindern.

2. Hebelvorrichtung (10) nach Anspruch 1, **dadurch gekennzeichnet, dass** der Griff (14) durch eine Führungseinrichtung (42) geführt wird, durch die das Rastierelement (24) in einer vorbestimmten Position des Hebels (12) in eine Raststellung bewegbar ist, wobei das Rastierelement (24) durch Ziehen an dem Griff (14) in einer Hebelachsrichtung in eine Lösestellung bewegbar ist.

3. Hebelvorrichtung (10) nach Anspruch 2, **dadurch gekennzeichnet, dass** die Führungseinrichtung (42) zusätzlich einen Führungsring (22) aufweist, der zur Anlage an dem Rastierelement (24) vorgesehen ist.

4. Hebelvorrichtung (10) nach einem der Ansprüche 2 bis 3, **dadurch gekennzeichnet, dass** die Führungseinrichtung (42) den Griff (14) mit rotatorischem Freiheitsgrad um den Hebel (12) führt.

5. Hebelvorrichtung (10) nach einem der vorangehenden Ansprüche, **dadurch gekennzeichnet, dass** das Rastierelement (24) einem Rastiermechanismus zugeordnet ist, der eine Gleitbahn (34) aufweist, an der das Rastierelement (24) gleitfähig anliegt, wobei die Gleitbahn (34) bei einer vorbestimmten Position des Hebels (12) ein Einrasten des Rastierelements (24) ermöglicht, so dass das Rastierelement (24) den Hebel (12) in der vorbestimmten Position fixiert.

6. Hebelvorrichtung (10) nach einem der vorangehenden Ansprüche, **dadurch gekennzeichnet, dass** das Rastierelement (24) zumindest einen Einrastabschnitt (36), vorzugsweise einen Einrastvorsprung (36), mit einer daran vorgesehenen Fase (38) aufweist.

## Claims

1. Lever device (10), in particular lever device (10) for a handbrake valve of a braking system, comprising a lever (12) pivotable about a pivot axis and a handle (14) provided for varying the position of the lever (12) and guided for movement relative to the lever (12), wherein there is further provided a latching element (12) movable relative to the lever (12) and used to locate the lever (12) in position, **characterised in that** sections (26, 46) of the handle (14) which are adjacent to the latching element (24) are located at a radial distance (A, B) from the latching element (24) in respect of a lever axis (44), in order to prevent a transmission of torque components which are not oriented parallel to the pivot axis from the handle (14) to the latching element (24).

2. Lever device (10) according to claim 1, **characterised in that** the handle (14) is guided by a guide device (42), by which the latching element (24) can be moved into a latching position in a predetermined position of the lever (12), wherein the latching element (24) can be moved into a release position by pulling the handle (14) in a lever axis direction.

3. Lever device (10) according to claim 2, **characterised in that** the guide device (42) additionally comprises a guide ring (22), which is provided for bearing against the latching element (24).

4. Lever device (10) according to claim 2 or 3, **characterised in that** the guide device (42) guides the handle (14) with a rotatory degree of freedom about the lever (12).

5. Lever device (10) according to any of the preceding claims, **characterised in that** the latching element (24) is assigned to a latching mechanism, which comprises a slide (34), against which the latching element (24) bears while being capable of sliding, wherein the slide (34) allows the latching element (24) to latch in a predetermined position of the lever (12), so that the latching element (24) locates the lever (12) in the predetermined position.

6. Lever device (10) according to any of the preceding claims, **characterised in that** the latching element (24) comprises at least one latch-in section (36), preferably a latch-in projection (36), with a chamfer (38) provided thereon.

## Revendications

1. Dispositif (10) à levier, notamment dispositif (10) à levier pour une soupape de frein à main d'un système de freinage, comprenant un levier (12) pivotant autour d'un axe de pivotement et une poignée (14), qui sert à modifier la position du levier (12) et qui est guidée de manière mobile par rapport au levier (12), dans lequel il est prévu, en outre, mobile par rapport au levier (12), un élément (24) d'encliquetage, qui sert à immobiliser le levier (12) en position, **caractérisé en ce que** les parties (26, 46), voisines de l'élément (24) d'encliquetage, de la poignée (14) sont disposées, par rapport à l'élément (24) d'encliquetage, à une distance (A, B) radiale par rapport à un axe (44) du levier, pour empêcher une transmission de la poignée (14) à l'élément (24) d'encliquetage de composantes de couple de rotation dirigées non parallèlement à l'axe de pivotement.

2. Dispositif (10) à levier suivant la revendication 1, **caractérisé en ce que** la poignée (14) est guidée par un dispositif (42) de guidage, par lequel l'élément (24) d'encliquetage peut, en une position définie à l'avance du levier (12), venir dans une position d'encliquetage, l'élément (24) d'encliquetage pouvant, en tirant la poignée (14) dans une direction de l'axe du levier, venir dans une position de desserrage.

3. Dispositif (10) à levier suivant la revendication 2, **caractérisé en ce que** le dispositif (42) de guidage a, en outre, une bague (22) de guidage, qui est prévue pour venir s'appliquer à l'élément (24) d'encliquetage.

4. Dispositif (10) à levier suivant l'une des revendications 2 à 3, **caractérisé en ce que** le dispositif (42) de guidage guide la poignée (14) avec un degré de liberté en rotation autour du levier (12).

5. Dispositif (10) à levier suivant l'une des revendications précédentes, **caractérisé en ce que** l'élément (24) d'encliquetage est associé à un mécanisme d'encliquetage, qui a une piste (34) de glissement, sur laquelle l'élément (24) d'encliquetage s'applique avec possibilité de glisser, la piste (34) de glissement permettant, en une position déterminée à l'avance du levier (12), un encliquetage de l'élément (24) d'encliquetage, de sorte que l'élément (24) d'encliquetage immobilise le levier (12) en la position définie à l'avance.

6. Dispositif (10) à levier suivant l'une des revendications précédentes, **caractérisé en ce que** l'élément (24) d'encliquetage a au moins une partie (36) d'encliquetage, de préférence une saillie (36) d'encliquetage, ayant un biseau (38), qui y est prévu.
